# EUROPEAN PATENT APPLICATION

(11) **EP 0 740 446 A2**
(43) Date of publication of application: **30.10.1996**
(21) Application number: 96302971.5
(22) Date of filing: 26.04.1996
(51) Int. Cl.: H04M 1/02

(54) **Portable electronic equipment**

(30) Priority: 26.04.1995 JP 101538/95
(71) Applicant: NEC CORPORATION, Tokyo (JP)
(72) Inventor: Imai, Fumihito, Tokyo (JP)
(74) Representative: Moir, Michael Christopher

(57) **Abstract**

In a portable electronic equipment including a body, a touch panel which is formed on the body for inputting an information by touching a predetermined portion thereof, and a protecting cover which is mounted on the body and being freely moveable between an open position and a closed position for covering the touch panel, a plurality of touch keys are formed on the protecting cover. Each of the touch keys corresponds to a predetermined portion of the touch panel. An input to the touch panel can be made by the use of the touch keys even when the protecting cover is in a closed position. Input operation can therefore be completed without opening the protecting cover. Accordingly, it becomes possible to effectively cope with an urgent input operation.

## Description

This invention relates to portable electronic equipment and, in particular, to portable electronic equipment which has a telephone function and a data processing function.

As will later be described in greater detail, a conventional portable electronic equipment of the type described comprises a body, a touch panel formed on the body for inputting an information by touching a predetermined portion thereof, a protecting cover mounted on the body being freely moveable between an open position and a closed position for covering the touch panel.

When the dial and the data input operations need to be carried out, the protecting cover is moved to the open position. The input for the dial or the data input operation is then completed by touching the predetermined portion on the touch panel.

In the conventional portable electronic equipment, it is inevitable that the protecting cover must be moved from the closed position to the open position so as to carry out the input operation. As a result it is troublesome to carry out the operation for opening the protecting cover.

This may result in a defect, in particular when an input operation is urgently required.

It is therefore an object of at least the preferred embodiments of the present invention to provide a portable electronic equipment in which the input operation can be carried out without the opening operation of the protecting cover.

According to this invention, there is provided portable electronic equipment comprising: a body; a touch panel which is formed on the body for inputting information by touching a predetermined portion thereof; a protecting cover mounted on the body and moveable between an open position and a closed position for covering the touch panel; and a touch key which is formed on the protecting cover in a position corresponding to the predetermined portion of the touch panel.

The protecting cover may be pivotally connected to the body.

The touch key may comprise essentially of an elastic material so that the touch key is brought into contact with the predetermined portion by pushing the touch key when said protecting cover is in a closed porition.

The portable electronic equipment may have a telephone function and the touch key may be a key required for a dial operation.

The portable electronic equipment may further comprise an input pen, the touch panel having at least two display modes one of which is a display mode corresponding to an input by the touch key and another of which is a display mode corresponding to an input by the input pen.

The portable electronic equipment may further comprise a control section for changing the display mode corresponding to the input by the input pen into the display mode corresponding to the input by the touch key.

The control section may comprise switching means which are operable when the protecting cover is in a closed position, and changing means for changing the display mode corresponding to the input by the input pen into the display mode corresponding to the input by the touch key in response to the switching means.

Preferred features of the present invention will now be described, purely by way of example only, with reference to the accompanying drawings, in which:-
Fig. 1A is a perspective view of a conventional portable electronic equipment, in which the protecting cover is in a closed position;
Fig. 1B is a perspective view of the conventional portable electronic equipment illustrated in Fig. 1A, in which the protecting cover is in an open position;
Fig. 2 is a perspective view of a portable electronic equipment according to a preferred embodiment of this invention, in which the protecting cover is in an open position;
Fig. 3 is a partially cross sectional view of a changing switch of the portable electronic equipment illustrated in Fig. 2;
Fig. 4A is a view of a part of a touch panel which can be seen from a window;
Fig. 4B is a view of a whole of a touch panel which is in a display mode corresponding to an input by the touch key;
Fig. 4C is a view of a whole of a touch panel which is in a display mode corresponding to an input by an input pen;
Fig. 5A is a perspective view of the portable electronic equipment illustrated in Fig. 2, in which the protecting cover is in a closed position;
Fig. 5B is a partially enlarged cross sectional view taken from A-A line of Fig. 5A; and
Fig. 6 is a schematic block diagram showing an internal function of the portable electronic equipment illustrated in Fig. 2.

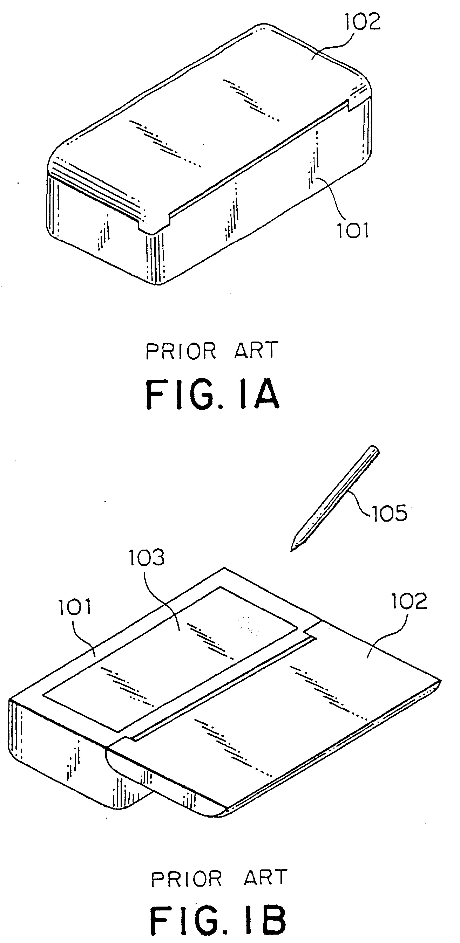

Referring to Figs. 1A and 1B, a conventional portable electronic equipment will first be described for a better understanding of the present invention.

In Figs. 1A and 1B, illustrated is a conventional multi-function-type portable electronic equipment having a telephone function and a data processing function.

The conventional portable electronic equipment comprises a body 101, a touch panel 103 formed on the body for inputting an information by touching a predetermined portion thereof, a flipper 102 serving as a protecting cover mounted on the body 102 serving as a protecting cover mounted on the body 101 being moveable between an open position and a closed position for covering the touch panel 103. The conventional portable electronic equipment further comprises a touch pen 105 for touching the predetermined portion of the touch panel 103.

When the dial and the data input operations need to be carried out, the flipper 102 is moved to the open position, as illustrated in Fig. 1B. The input for the dial or the data input operation is then completed by touching the predetermined portion of the touch panel 103 with the touch pen 105.

However, in the conventional portable electronic equipment, it is inevitable that the flipper 102 must be moved from the closed position as shown in Fig. 1A to the open position as shown in Fig. 1B so as to carry out the input operation. As a result, it is troublesome to carry out the operation for opening the flipper 102.

This may result in a defect, in particular when an input operation is urgently required.

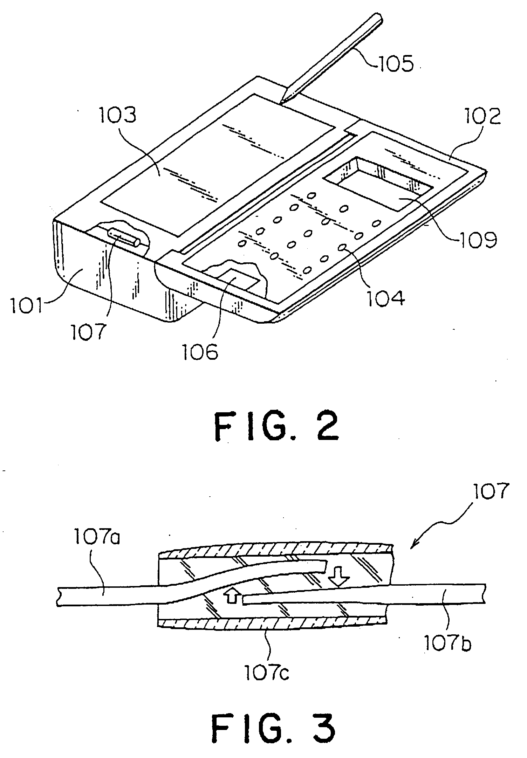

Referring to Figs. 2 to 6, description proceeds to a portable electronic equipment according to a preferred embodiment of this invention.

In Fig. 2, the portable electronic equipment comprises a body 101, a touch panel 103 which is formed on the body 101 for inputting an information by touching a predetermined portion thereof, a flipper 102 which is pivotally connected to the body 101 and being freely movealbe between an open position and a closed position for covering the touch panel 103, and a plurality of touch keys 104 each of which is formed on the flipper 102 and each of which corresponds to the predetermined portion of the touch panel 103.

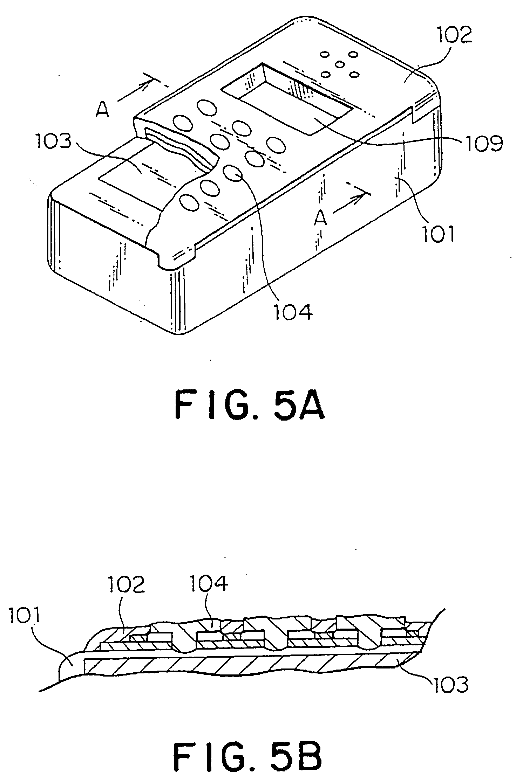

As illustrated in Fig. 5B, the touch keys 104 consist essentially of an elastic material so that each touch key 104 is brought into contact with the predetermined portion by pushing the touch key 104 when the flipper 102 is in the closed position. Generally used material, such as a silicon gum and the like, may be employed as the elastic material. By pushing these touch keys 104 when the flipper 102 in the closed position, the tip of the pushed touch key 104 is brought into contact with the corresponding portion of the touch panel 103. The touch input can be completed accordingly. A relationship between the flipper 102 and the touch keys 104 is shown in Fig. 5B. The tip portions of the touch keys 104 are spaced from the touch panel 103 by a predetermined distance, when the portable electronic equipment is in a normal (closed flipper 102) condition.

In this preferred embodiment of the present invention, the portable electronic equipment has a telephone function and the touch keys 104 are keys such as these required for a dial operation of a telephone.

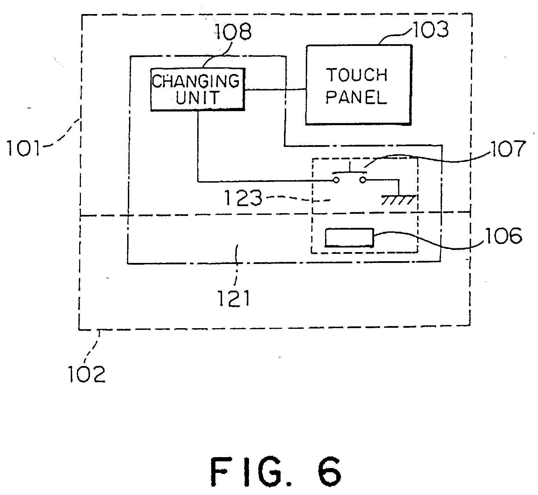

The portable electronic equipment further comprises a touch pen 105. The touch panel 103 has at least two display modes one of which is a display mode corresponding to an input by the touch keys 104 and another of which is a display mode corresponding to an input by the touch pen 105. The portable electronic equipment further comprises a control section 111 as illustrated in Fig. 6 for changing the display mode corresponding to the input by the touch pen 105 into the display mode corresponding to the input by the touch keys 104.

As illustrated in Fig. 6, the control section 121 comprises a switching portion 123 which is operable when the flipper 102 is in the closed position, and a changing unit 108 for changing the display mode corresponding to the input by the touch pen 105 into the display mode corresponding to the input by the touch keys 104 in response to the switching portion 123. The switching portion 123 comprises a changing switch 107 and a magnet 106, as shown in both Figs. 2 and 6. The changing switch 107 comprises metal wire members 107a and 107b, and a glass tube 107c. When the magnet 106 is moved close to the changing switch 107, by moving flipper 102 to the closed position, the metal wire members 107a and 107b move towards each other to make electrical contact in an "ON" condition, as illustrated in Fig. 3. The changing unit 108 detects such an "ON" condition of the changing switch 107 to effect a change in the display mode of the touch panel 103, as will be understand from Fig. 6. Thus, the changing switch 107 is positioned on the body 101 such that the magnet 106 is facing the changing switch 107 when the flipper 102 is moved to the closed position. When the flipper 102 is so moved, the changing switch 107 becomes operable in response to the magnet 106. Responsive to the operation of the changing switch 107, the changing unit 108 detects the operation of the changing switch 107 and converts the picture of the touch panel 103 from a display corresponding to the touch pen input into that corresponding to the touch keys input.

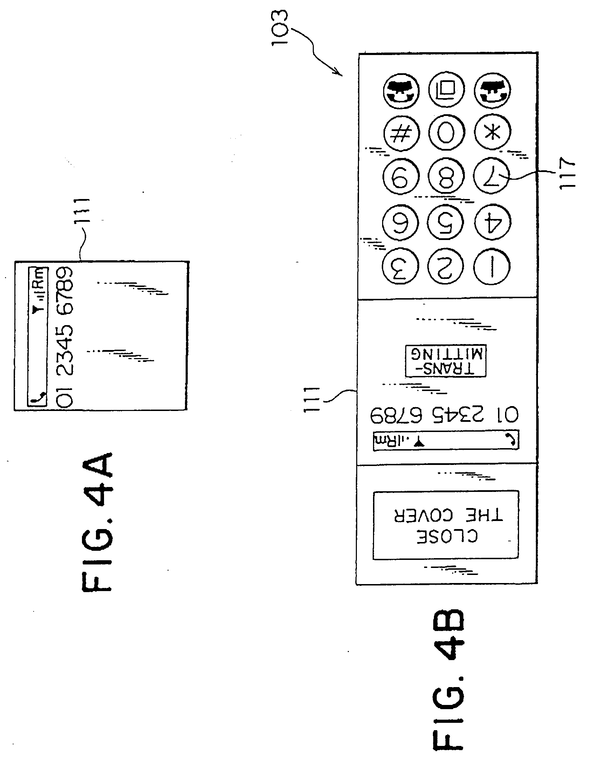

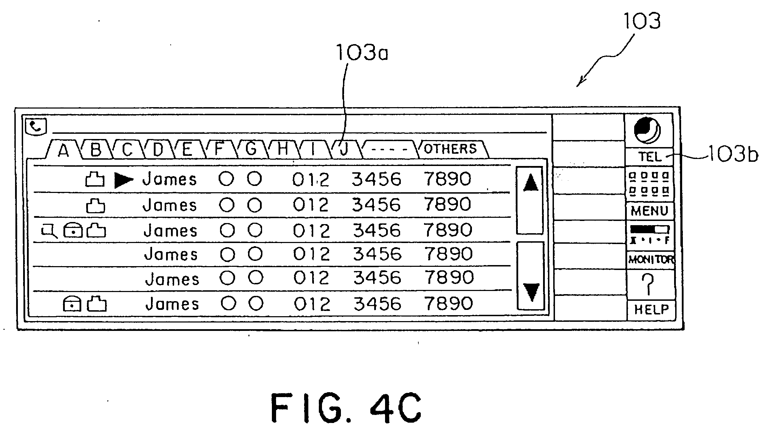

Referring now to Figs. 4A, 4B and 4C, description is made about the change of the display mode of the touch panel 103. Fig. 4A is a view of a part of the touch panel 103 which is seen from a window 109. Fig. 4B is a view of a whole of the touch panel 103 which is in a display mode corresponding to an input by the touch keys 104 while Fig. 4C is a view of a whole of the touch panel 103 which is in a display mode corresponding to an input by the touch pen 105. In a general situation, the mode of the touch panel 103 is, for example, in such a mode as illustrated in Fig. 4C. In this display mode of the touch panel 103, a telephone numbers list is shown, as illustrated in Fig. 4C. When a user of the portable electronic equipment wishes to telephone a certain person, the user should push a predetermined index portion 103a using touch pen 105 for displays of the telephone number of this person.

Furthermore, the user should push a predetermined square portion 103b for changing the display mode of the touch panel 103 to change the mode shown in Fig. 4C into that shown in Fig. 4B. Then, the user can telephone the certain person by pushing the dial buttons 117 shown in Fig. 4B corresponding to the telephone number of the certain person also with the use of the touch pen 105.

On the other hand, when the flipper 102 is in the closed position, as shown in Fig. 5A, the display mode of the touch panel 103 always remains in the mode shown in Fig. 4B. Accordingly, the user can telephone this person by pushing the touch keys 104 formed on the flipper 102 corresponding to the telephone number of the certain person, for example, by using fingers. Thus, an input operation of the telephone number can be completed without moving the flipper 102 to the open position. Accordingly, it becomes possible to effectively cope with an urgent input operation. Furthermore, a part 111 of the display of the touch panel 103 can be viewed through the window 109, as will be understood from Figs. 4A and 4B. It is therefore possible for the user to push the touch keys 104 with a confirmation of the numbers so pushed appearing on the part 111 of the display seen through the window 109.

As mentioned shove, according to the preferred embodiment of the present invention, the touch keys 104 are provided in the flipper 102 which is a protecting cover covering the touch panel 103. The input to the touch panel 103 can be done even when the flipper 102 is in a closed position. Input operation can be completed without moving the flipper 102 to an open position during the input operation. Accordingly, it becomes possible to effectively cope with an urgent input operation

While this invention has thus far been described in specific conjunction with a preferred embodiment thereof, it will now be readily possible for one skilled in the art to put this invention into effect in various other manners. For example, as for the kinds of the touch keys 104 formed in the flipper 102, it is considered to form at least such input keys as used during an urgent input operation without moving the flipper 102 to the open position.

As a result, there is a difference between the display of the touch panel 103 in the normal input operation by the touch pen 105 with the flipper 102 in the open position and that in the urgent input operation by the touch keys 104 with the flipper 102 in the closed position. As an example of the touch keys 104 mounted on the flipper 102, dial buttons, call buttons, or the like are considered when the portable electronic equipment has a telephone function. Furthermore, a microswitch may be employed to detect the closed position of the flipper 102. A circuit for detecting the closed position of the flipper 102 is not restricted to the illustrated example.

## Claims

1. Portable electronic equipment comprising a body, a touch panel which is formed on said body for inputting information by touching a predetermined portion thereof, and a protecting cover mounted on said body and moveable between an open position and a closed position for covering said touch panel, characterized in that a touch keys is formed on said protecting cover in a position corresponding to said predetermined portion of said touch panel.

2. Portable electronic equipment as claimed in claim 1, characterized in that said protecting cover is pivotally connected to said body.

3. Portable electronic equipment as claimed in Claim 1 or Claim 2, characterized in that said touch key comprises an elastic material so that said touch key is brought into contact with said predetermined portion by pushing said touch key when said protecting cover is in a closed position.

4. Portable electronic equipment as claimed in any preceding claim, characterized in that said portable electronic equipment has a telephone function and said touch key is a key required for a dial operation.

5. Portable electronic equipment as claimed in any preceding claim, characterized in that said portable electronic equipment further comprises an input pen, said touch panel having at least two display modes one of which is a display mode corresponding to an input by said touch key and another of which is a display mode corresponding to an input by said input pen.

6. Portable electronic equipment as claimed in claim 5, characterized in that said portable electronic equipment further comprises a control section for changing said display mode corresponding to said input by said input pen into said display mode corresponding to said input by said touch key.

7. Portable electronic equipment as claimed in claim 6, characterized in that said control section comprises switching means which are operable when said protecting cover is in a closed position, and changing means for changing said display mode corresponding to said input by said input pen into said display mode corresponding to said input by said touch key in response to said switching means.
